(19)

Europäisches
Patentamt
European
Patent Office
Office européen
des brevets

(11)     **EP 2 034 442 A1**

(12)     **EUROPEAN PATENT APPLICATION**

(43) Date of publication:
**11.03.2009 Bulletin 2009/11**

(51) Int Cl.:
*G06T 11/00* [(2006.01)]     *G06T 5/00* [(2006.01)]

(21) Application number: **07301343.5**

(22) Date of filing: **06.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Zhu, Lihua**
  **100085 Beijing (CN)**

• **Huang, Peijie**
  **100085 Beijing (CN)**
• **Zhang, Hui**
  **100085 Beijing (CN)**
• **Yang, Jiheng**
  **100085 Beijing (CN)**

(74) Representative: **Rittner, Karsten**
**Deutsche Thomson OHG**
**European Patent Operations**
**Karl-Wiechert-Allee 74**
**30625 Hannover (DE)**

(54)     **Method for non-photorealistic rendering of an image frame sequence**

(57)     The invention is related to non-photorealistic rendering (NPR) of images frame sequences.

A method for non-photorealistic rendering of an image frame sequence is described, wherein the method comprises abstracting a current image frame temporally by help of an adjacent image frame.

Abstracting the image frame in the temporal domain cartoonizes and smoothes the appearance of the image frame sequence resulting in less flickering and less artefacts.

Input
Video

Edge Highlighting 100

Spatial Abstraction 110

Temporal Abstraction 120

Resulting
Video

Fig. 1

EP 2 034 442 A1

**Description**

Background

The invention is related to non-photorealistic rendering (NPR) of images frame sequences.

NPR comprises stylization techniques for transforming natural videos into painterly styled or cartoon styled images videos.

Primarily, stylization was applied for artistic purposes only. But, as styled images comprise less details and/or larger areas of uniform pixel stylization is used for efficient visual telecommunication, also. A stylized image comprises a smaller high frequency portion than the corresponding natural image. Therefore, it is better compressible. A decoded stylized image comprises less annoying artefacts than the corresponding natural image compressed with the same compression rate.

In recent years, stylization techniques has been applied in making movies such as "waking life" (2001) and "a scanner darkly" (2006) from natural video which resulted in cartoon like animations from natural video.

Video stylization for entertaining purposes and video stylization for visual communication are subject to contradicting requirements. Anyway, both applications are subject to temporal incoherencies. That is, the appearance for the similar contents in neighboring frames is not consistent, resulting in flickering and artefacts popping up and vanishing.

There is a need for a reduction of such artefacts.

Invention

This is achieved by a method for non-photorealistic rendering of an image frame sequence, the method comprising the features of claim 1.

Said method comprises abstracting a current image frame temporally by help of an adjacent image frame.

Abstracting the image frame in the temporal domain cartoonizes and smoothes the appearance of the image frame sequence resulting in less flickering and less artefacts.

Preferably, the method further comprises edge highlighting. Edge highlighting preferably comprises detecting temporal correspondence between the current image frame and the adjacent image frame; filtering the current image frame spatiotemporally by help of the adjacent image frames; detecting edges in the filtered image frame and glorifying the edges in the filtered image frame.

This reduces flickering even more.

It is also preferred that filtering spatiotemporally comprises filtering the current image frame spatially by help of a first Gauss filter with a spatial Gauss filter weight and filtering the spatially filtered image frame temporally by help of a second Gauss filter with a temporal Gauss filter weight wherein temporal filtering and spatial filtering are separated.

This smoothes the image frame sequence which also helps prevention of flickering.

It is further preferred that detecting temporal correspondence comprises determining optical flow between the current image frame and the adjacent frames.

In another preferred embodiment glorifying the edges in the current image frame comprises applying morphological operators in the spatial domain and applying morphological operator in the temporal domain.

In even another preferred embodiment, spatial diffusion by help of an inverted Gaussian spatial bilateral filter is applied to the edge highlighted image frame.

The inverted-Gaussian-spatial bilateral filter, which uses inverted-Gaussian function as the kernel of spatial filter, can remove small spots in large smooth area more efficiently. Efficiency is especially important in the context of real time visual telecommunication.

In an alternative embodiment, spatial diffusion by help of a mean shift modification is applied to the edge highlighted image frame.

Mean shift modification enhances the cartoon like effect which is especially important for entertaining purposes.

In yet another preferred embodiment, after edge highlighting a stylization step is performed.

Drawings

Exemplary embodiments of the invention are illustrated in the drawings and are explained in more detail in the following description.

In the figures:

Fig. 1    shows a flow chart of an exemplary embodiment of the inventive method;

Fig. 2    exemplarily shows details of edge highlighting;

Fig. 3    shows exemplary processing steps of spatial abstraction and

Fig. 4    shows an exemplary workflow of a Mean-shift algorithm

Exemplary embodiments

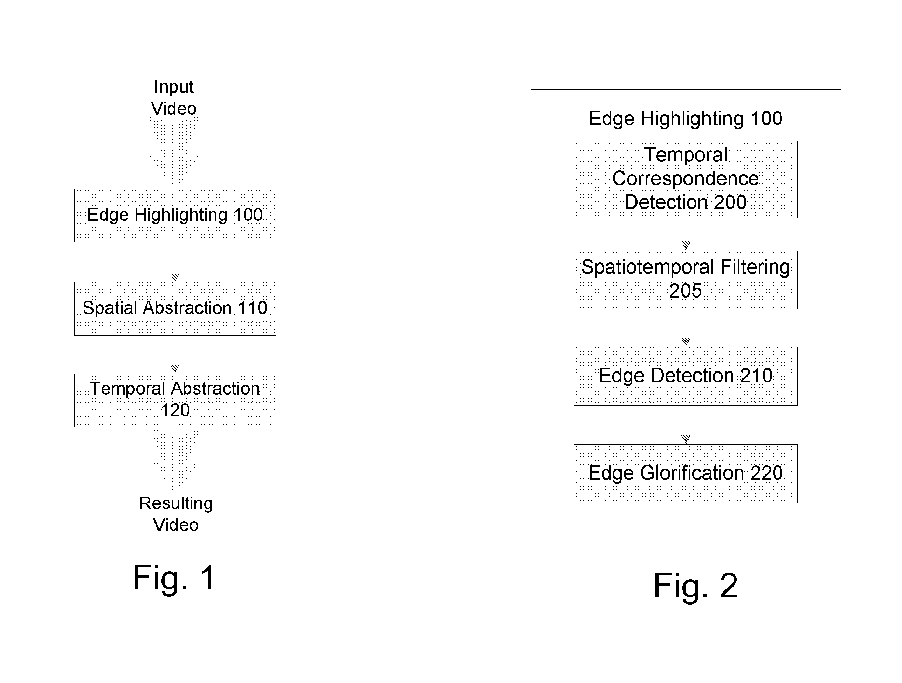

Fig. 1 depicts a flowchart of an exemplary embodiment of the inventive method.

The proposed framework consists of three main components: edge highlighting 100, spatial abstraction 110 and temporal abstraction 120.

Block 100 highlights the important edges that constitute the basic structure of the video. It takes the luminance information of current and neighboring frames as inputs, and generates an edge map of current frame as output. Deliberate processing is designed to make the edges reasonable and temporally coherent, which will be further explained in Fig. 2.

Block 110 abstracts the current frame based on its color information. In this component, a diffusion process 300 is performed across the entire frame, followed by some stylization processes 310 that generate the required stylization effects (e.g. cartoon-like, paint-like, etc.)

Block 120 performs the abstraction operation along time axis to make the final result coherent between adjacent frames. Therefore the flickering artifacts are greatly reduced.

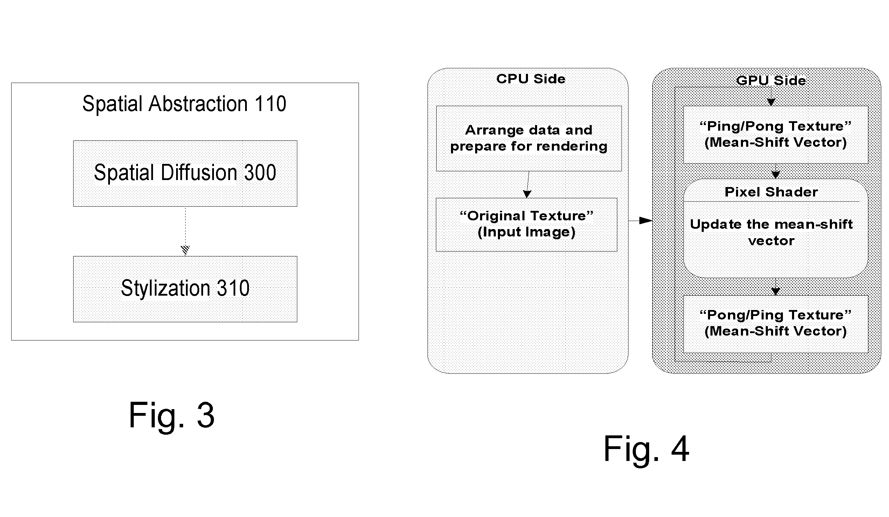

Block 100 comprises four sub-steps: temporal correspondence detection 200, spatiotemporal filtering 205, edge detection 210 and edge glorification 220, as shown in Fig. 2. Block 110 comprises two sub-steps: spatial diffusion 300 and stylization 310, as shown in Fig. 3. All sub-steps will be explained in successive sub-sections.

Temporal Correspondence Detection

For temporal filtering, the correspondence of pixels between neighboring frames is calculated first. A variety of methods with different tradeoff between time and accuracy can be used here to detect the correspondences. For example, optical flow between adjacent frames is calculated to match correspondent pixels. Based on the correspondences, spatiotemporal filtering can be performed across several consecutive frames. Note that this detected correspondence is used in block 120.

Spatiotemporal Filtering

A 3D filtering, i.e. along the spatial and the temporal axis, is performed so that the edges detected are coherent in the temporal domain, also. There are various filters that can be used in this step, e.g. Gaussian filter, bilateral filter, mean filter, median filter etc. A filter which is separable between the dimensions has the advantage of being efficiently computable. For example, the 3D Gaussian filtering can be fast implemented by separating the spatial and temporal dimensions.

A exemplary embodiment of a spatial Gaussian filter operator is defined in equation (1), where $I()$ and $I'()$ represent the images before and after filtering. $(x_0, y_0)$ is the coordinate of the pixel being filtered while $\Omega$ is the spatial neighborhood of $(x_0, y_0)$. $\sigma$ is the standard deviation of the distribution.

$$\widetilde{I}(x_0, y_0) = \frac{\sum\limits_{(x,y) \in \Omega} I(x, y) w_{x,y}}{\sum\limits_{(x,y) \in \Omega} w_{x,y}} \tag{1}$$

where

$$w_{x,y} = \frac{1}{2\pi\sigma^2} e^{-[(x-x_0)^2 + (y-y_0)^2]/2\sigma^2} \tag{2}$$

is the spatial Gaussian weight.

The temporal Gaussian filter operator is defined as equation (3).

$$\widetilde{I}(t_0, x_0, y_0) = \frac{\sum_{t \in \Psi} I(t, c(x_0, y_0, t_0, t)) w_{t, c(x_0, y_0, t_0, t)}}{\sum_{t \in \Psi} w_{t, c(x_0, y_0, t_0, t)}} \qquad (3)$$

where

$$w_{t, c(x_0, y_0, t_0, t)} = \frac{1}{\sigma \sqrt{2\pi}} e^{-(t-t_0)^2 / 2\sigma^2} \qquad (4)$$

is the temporal Gaussian weight. $(t_o, x_o, y_o)$ is the location of the pixel being filtered, i.e. at $(x_0, y_0)$ in frame to. $c(t_0, x_0, y_0)$ is the temporal correspondence function that projects $(x_0, y_0)$ at frame to to its corresponding pixel at frame t, computed in Block 200. $\Psi$ is the set of neighboring frames preceding or succeeding frame to.

Filtering successive frames along time axis, or computing equation (3) is very time-consuming. For better computational efficiency, a parallel algorithm on graphics hardware like a graphic processing unit (GPU) was designed. The filtering step is mapped to a multi-pass rendering process. More specifically, all neighbouring frames are rendered as textures to an accumulated buffer one by one. In each pass, the weighted luminance of the corresponding pixels in a frame is accumulated. The final pass normalizes the weights to get the filtered result.

Edge Detection

Several edge detection algorithms fit in this step, e.g. Sobel, Laplace, Canny, Difference-Of-Gaussians etc. Among them, canny operator is the recommended choice since it is known to many as the optimal edge detector. It can link small edges together with adaptive thresholds.

Edge Glorification

Noise might still exist after the previous steps. In this step, small areas of edge points are eliminated using morphological operations, i.e. opening. Applying morphological filtering on each image separately produces a great deal of flickering, as many edge features appear and disappear at every frame, producing noticeable "popping" artifacts. To reduce temporal artifacts, the morphological structure element is extended into the temporal domain. The 3D element reduces flickering as it guarantees that each important edge remains visible during all neighboring frames. After morphological filtering which comprises dilatation and/or erosion, remaining edge points are darkened, dilated and truncated to produce stylized edge features, before they are applied to the video textures.

Spatial Diffusion

GPU-Based Mean-Shift Algorithm

If highly aesthetic cartoon effects are desired a GPU-Based mean-shift algorithm could be applied during spatial diffusion. For each pixel x in the image frame, a mean-shift vector $m_{h,G}(x)$ is calculated as follows:

$$m_{h,G}(x) = \frac{\sum_{i=1}^{n} x_i g\left(\left\|\frac{x - x_i}{h}\right\|^2\right)}{\sum_{i=1}^{n} g\left(\left\|\frac{x - x_i}{h}\right\|^2\right)} - x, \qquad (5)$$

wherein $x_i$ are the surrounding pixels, and $g(\text{'})$ is a specified kernel function. The mean-shift vectors will be calculated iteratively till all pixels find their corresponding modes (at that point, the mean-shift vectors equal to zero).

The GPU-Version mean-shift algorithm terminates after a fix number of iteration, before all the pixels find their corresponding modes. By doing so, the algorithm could be implemented on GPUs much easier and with great improvement of computational efficiency. The workflow is shown in Fig.4. On side of a CPU, data is arranged and a rendering environment is initialized. The "Original Texture" stores a current input image frame. On a GPU side, mean-shift vectors are updated iteratively in a pixel shader. The number of the iterations is fixed. Good results with good cartoon-like effect where achieved with ten iterations. The "Ping Texture" and the "Pong Texture" are used during the iterative rendering. Compared with bilateral filter, it is more complex in computation but it produces result with better aesthetic effect. So the GPU-based mean-shift algorithm could be adopted when high aesthetic effect is required.

Inverted-Gaussian-Spatial Bilateral Filter

Alternatively, if efficient computation is preferred over aesthetics, an adapted iterative bilateral filter is applied. Iterative bilateral filters have the attribute of preserving crisp edges.

For an input image $I$ and output image H, the general form of bilateral filter could be defined as follows:

$$H(c,\Omega) = \frac{\sum_{a \in \Omega} f(P(a) - P(c))g(I(a) - I(c))I(a)}{\sum_{a \in \Omega} f(P(a) - P(c))g(I(a) - I(c))} \qquad (6)$$

In this formula, $c$ is a pixel, a are the neighbouring pixels in window Q, $P(\text{'})$ returns the position of a pixel and $I(\text{'})$ returns a pixel's intensity value. $f(\text{'})$ is spatial filtering function and $g(\text{'})$ is intensity filtering function.

The inverted-Gaussian-spatial bilateral filter uses for spatial filtering the following filtering functions which takes a curve of inverted Gaussian:

$$f(P(a) - P(c)) = 2 - e^{-\frac{1}{2}(\frac{E(P(a),P(c))}{\sigma_d})^2} \qquad (7)$$

wherein Function $E(\text{'})$ returns the Euler distance between two pixels.

For intensity filtering the following filtering function is applied:

$$g(I(a) - I(c)) = e^{-\frac{1}{2}(\frac{|I(a) - I(c)|}{\sigma_r})^2} \qquad (8)$$

Thus, the inverted-Gaussian-spatial bilateral filter has the following form:

$$H(c,\sigma_r,\sigma_d) = \frac{\sum_{a \in \Omega}(2 - e^{-\frac{1}{2}(\frac{E(P(a),P(c))}{\sigma_d})^2})e^{-\frac{1}{2}(\frac{|I(a) - I(c)|}{\sigma_r})^2}I(a)}{\sum_{a \in \Omega}(2 - e^{-\frac{1}{2}(\frac{E(P(a),P(c))}{\sigma_d})^2})e^{-\frac{1}{2}(\frac{|I(a) - I(c)|}{\sigma_r})^2}} \qquad (9)$$

wherein $\sigma_d$ is related to the blur radius and so determines the window $\Omega$ and $\sigma_r$ is related to the extent of the intensity filtering. With $\sigma_r$=4.5 and $\sigma_d$=2.5 filtering in CIE-Lab color space is performed.

Inverted-Gaussian-spatial bilateral filter produces cleaner results than Gaussian-spatial bilateral filter. The colours in each region are more uniform and there are less trivial edges. This also contributes to video coding efficiency. So in the video telecommunication scenario, Inverted-Gaussian-spatial bilateral filter could be applied as to save transmission bandwidth.

The spatial diffusion step blurs small discontinuities and sharpens edges within each frame, guided by a nonlinear diffusion function that varies over the image.

Stylization

To produce cartoon or paint-like effects, an optional colour quantization step is performed on the abstracted image frame. Quantization is a key step to simulate cartoon-like effect. The basic idea is to avoid a large output change caused by a small input change in the low luminance gradient region. This gradient-based soft quantization strategy could make the sudden luminance changes in low gradient region less noticeable. However, the temporal coherence for the whole video is still visible, for the edges detected by each frame are sometimes not related with each other and they may flicker here and there.

Temporal abstraction

Both steps of spatial diffusion and stylization are performed on individual frame, thus appearance and vanish of the stylized features also produce "popping" artifacts. To reduce these temporal artifacts in the resulting frames, temporal discontinuities between corresponding pixels in adjacent frames are considered, as well. Therefore, as the last step, a temporal abstraction step is applied. This keeps the stylized video features coherent, without temporal flickering effects. Temporal abstraction is realized as a non linear diffusion process along time axis. Similar to spatial diffusion, a bilateral filtering is applied, but in temporal domain rather than spatial domain. The pixel correspondence between neighboring frames, calculated in block 200, is reused in this block.

**Claims**

1. Method for non-photorealistic rendering of an image frame sequence, the method comprising the step of

   - abstracting a current image frame temporally by help of an adjacent image frame.

2. Method according to claim 1, further comprising edge highlighting prior to abstracting the current frame temporarily wherein edge highlighting comprises

   - detecting temporal correspondence in the current image frame;
   - filtering the current image frame spatiotemporally by help of adjacent image frames;
   - detecting edges in the filtered image frame and
   - glorifying the edges in the filtered image frame.

3. Method according to claim 2, wherein detecting temporal correspondence comprises

   - determining optical flow between the current image frame and the adjacent frame.

4. Method according to claim 2 or 3, wherein filtering spatiotemporally comprises

   - filtering the current image frame spatially by help of a first Gauss filter with a spatial Gauss filter weight and
   - filtering the spatially filtered image frame temporally by help of a second Gauss filter with a temporal Gauss filter weight wherein
   - temporal filtering and spatial filtering are separated.

5. Method according to any of the preceding claims 2 to 4, wherein glorifying the edges in the current image frame comprises

   - applying morphological operators in the spatial domain and
   - applying morphological operator in the temporal domain.

6. Method according to any preceding claim 2 to 5, comprising

- abstracting the edge highlighted image frame spatially by help of spatial diffusion and stylization.

7. Method according to claim 5, wherein spatial diffusion comprises

- applying an inverted Gaussian spatial bilateral filter.

8. Method according to claim 5, wherein spatial diffusion comprises

- applying a mean shift modification.

EP 2 034 442 A1

Input
Video

↓

Edge Highlighting 100

↓

Spatial Abstraction 110

↓

Temporal Abstraction
120

↓

Resulting
Video

# Fig. 1

Edge Highlighting 100

Temporal
Correspondence
Detection 200

↓

Spatiotemporal Filtering
205

↓

Edge Detection 210

↓

Edge Glorification 220

# Fig. 2

**Fig. 4**

CPU Side

- Arrange data and prepare for rendering
- "Original Texture" (Input Image)

GPU Side

- "Ping/Pong Texture" (Mean-Shift Vector)
- Pixel Shader — Update the mean-shift vector
- "Pong/Ping Texture" (Mean-Shift Vector)

**Fig. 3**

Spatial Abstraction 110

- Spatial Diffusion 300
- Stylization 310

**European Patent Office**

## EUROPEAN SEARCH REPORT

Application Number

EP 07 30 1343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LITWINOWICZ P ED - ASSOCIATION FOR COMPUTING MACHINERY: "PROCESSING IMAGES AND VIDEO FOR AN IMPRESSIONIST EFFECT" COMPUTER GRAPHICS PROCEEDINGS. SIGGRAPH 97. LOS ANGELES, AUG. 3 - 8, 1997, READING, ADDISON WESLEY, US, 3 August 1997 (1997-08-03), pages 407-414, XP000765841 ISBN: 0-201-32220-7 | 1-6 | INV. G06T11/00 G06T5/00 |
| Y | * abstract * * page 407, left-hand column, last paragraph - right-hand column, paragraph 1 * * page 409, left-hand column, line 8 - right-hand column, line 16 * * page 410, right-hand column, last paragraph - page 411, left-hand column, line 31 * | 7,8 | |
| X | WANG J., XU Y., SHUM H.-Y., COHEN M.F.: "Video Tooning" ACM TRANSACTIONS ON GRAPHICS, vol. 23, no. 3, 31 August 2004 (2004-08-31), pages 547-583, XP002470160 | 1,2 | **TECHNICAL FIELDS SEARCHED (IPC)** G06T |
| Y | * abstract * * page 574, right-hand column, line 7 - page 577, right-hand column, line 3 * * figure 11 * | 8 | |

-/--

The present search report has been drawn up for all claims

| Place of search | Date of completion of the search | Examiner |
|---|---|---|
| Munich | 29 February 2008 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 30 1343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLLOMOSSE J.P., ROWNTREE D., HALL P.M.: "Stroke Surfaces: Temporally Coherent Artistic Animations from Video" IEEE TRANSACTIONS ON VISUALIZATION AND COMPUTER GRAPHICS, vol. 11, no. 5, 1 September 2005 (2005-09-01), pages 540-549, XP002470161 * abstract * * page 540, left-hand column, line 7 - line 25 * * page 540, right-hand column, line 19 - page 542, left-hand column, line 28 * section 2.3 * figures 8,9 * | 1,2 | |
| X | AGARWALA A ED - SPENCER S N (ED) ASSOCIATION FOR COMPUTING MACHINERY: "SNAKETOONZ: A SEMI-AUTOMATIC APPROACH TO CREATING CEL ANIMATION FROM VIDEO" NPAR 2002. SYMPOSIUM ON NON - PHOTOREALISTIC ANIMATION AND RENDERING. ANNECY, FRANCE, JUNE 3 - 5, 2002, SYMPOSIUM ON NON - PHOTOREALISTIC ANIMATION AND RENDERING, NEW YORK, NY : ACM, US, 3 June 2002 (2002-06-03), pages 139-146, XP001201021 ISBN: 1-58113-494-0 * abstract * * page 140, left-hand column, line 42 - page 141, right-hand column, last line * | 1 | TECHNICAL FIELDS SEARCHED (IPC) |

-/--

The present search report has been drawn up for all claims

| Place of search | Date of completion of the search | Examiner |
|---|---|---|
| Munich | 29 February 2008 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 30 1343

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PHAM T Q ET AL: "Separable Bilateral Filtering for Fast Video Preprocessing" MULTIMEDIA AND EXPO, 2005. ICME 2005. IEEE INTERNATIONAL CONFERENCE ON AMSTERDAM, THE NETHERLANDS 06-06 JULY 2005, PISCATAWAY, NJ, USA,IEEE, 6 July 2005 (2005-07-06), pages 454-457, XP010843294 ISBN: 0-7803-9331-7 | 7 | |
| A | * abstract * * page 454, left-hand column, line 1 - page 455, right-hand column, line 17 * ----- | 4,6 | |
| A | WINNEMOELLER H ET AL: "Real-Time Video Abstraction" SIGGRAPH CONFERENCE PROCEEDINGS,, 3 July 2006 (2006-07-03), pages 1221-1226, XP009095605 * the whole document * ----- | 1-8 | |
| | | | TECHNICAL FIELDS SEARCHED (IPC) |

The present search report has been drawn up for all claims

| Place of search | Date of completion of the search | Examiner |
|---|---|---|
| Munich | 29 February 2008 | Klemencic, Ales |

EPO FORM 1503 03.82 (P04C01)